(19) Europäisches Patentamt
European Patent Office
Office européen des brevets

(11) **EP 2 394 382 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(21) Anmeldenummer: **10701651.1**

(22) Anmeldetag: **18.01.2010**

(51) Int Cl.:
*H04J 3/06* (2006.01)    *H04L 25/05* (2006.01)
*H04L 7/00* (2006.01)

(86) Internationale Anmeldenummer:
**PCT/EP2010/050529**

(87) Internationale Veröffentlichungsnummer:
**WO 2010/089180 (12.08.2010 Gazette 2010/32)**

(54) **VERFAHREN UND VORRICHTUNG ZUM KOMPENSIEREN VON ABTASTRATENSCHWANKUNGEN**

METHOD AND DEVICE FOR COMPENSATING FOR SAMPLE RATE FLUCTUATIONS

PROCÉDÉ ET DISPOSITIF DE COMPENSATION DES VARIATIONS DES FRÉQUENCES D'ÉCHANTILLONNAGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.02.2009 DE 102009008092**

(43) Veröffentlichungstag der Anmeldung:
**14.12.2011 Patentblatt 2011/50**

(73) Patentinhaber: **ATLAS ELEKTRONIK GmbH 28309 Bremen (DE)**

(72) Erfinder:
• **SCHMIDT, Heiko
27299 Langwedel (DE)**
• **SCHWARZ, Jan-Philip
28213 Bremen (DE)**

(56) Entgegenhaltungen:
WO-A1-95/22233    US-A- 5 475 628
US-A- 6 061 410    US-A1- 2004 120 361
US-B1- 6 553 087

**Beschreibung**

Die Erfindung betrifft ein Verfahren sowie eine Vorrichtung zum Kompensieren von Schwankungen von Abtastraten, welche einem an einem Empfänger anliegenden Eingangsdatenstrom und einem von dem Empfänger ausgegebenen Ausgangsdatenstrom zugrunde liegen. Der Eingangsdatenstrom wird zunächst über ein Netzjitter verursachendes Kommunikationsnetz übertragen und danach am Empfänger in einem Puffer zwischengespeichert, dessen Füllstand mittels eines Pufferlesezeigers überwacht und im Bereich eines Sollwerts gehalten wird.

Dieses Verfahren bzw. eine derartige Vorrichtung wird bei asynchroner Echtzeitaudioübertragung verwendet, d.h. bei einer Echtzeitaudiodatenübertragung von einem Sender zu einem Empfänger, wobei Sender und Empfänger nicht miteinander synchronisiert sind, sondern mit freilaufenden Taktraten betrieben werden. Das Verfahren bzw. die Vorrichtung dient dazu, den evtl. auftretenden Netzjitter zu glätten und die Drift der Abtastraten bei Sender und Empfänger aufzufangen.

Die Erfindung wird primär in der Sonartechnik angewandt. Dabei ist ein sog. Horchkanal ein Bestandteil einer Sonaranlage und unterstützt einen Operator bei der Detektion, Analyse und Klassifizierung von schallabstrahlenden Zielen. Wichtig ist dabei, dass das auszugebende Audiosignal möglichst zeitnah, zum Empfang der vom Ziel abgestrahlten Schallwellen, verzerrungsfrei und insbesondere störungs- bzw. unterbrechungsfrei übertragen wird.

Herkömmlicherweise wird ein Antennentakt, d.h. der Takt, mit dem eine akustische Antenne (Wandleranordnung) abgetastet wird, über eine gesonderte Leitung bis zu dem für die Wiedergabe verantwortlichen Digital-/Analogwandler geführt, so dass die zur Audiowiedergabe vorgesehene Komponenten mit den im Bereich der Antenne vorgesehenen Komponenten synchronisiert sind. In derartigen Systemen mit solch einem proprietären separaten digitalen Übertragungsweg kann jedoch nicht auf einem allgemein anerkannten Standard entsprechende Baugruppen zurückgegriffen werden, da sie nicht mit den herkömmlicherweise verwendeten Spezialbaugruppen kompatibel sind. Will man sich jedoch von diesen Spezialbaugruppen trennen und stattdessen ein günstigeres standardisiertes Übertragungsmedium nutzen, so besteht ein Bedürfnis, auf asynchrone Lösungen wie z.B. das Ethernet zurückzugreifen.

Allerdings müssen sich bei der Verwendung eines solchen Mediums die Audiosignale die verfügbare Übertragungskapazität mit anderen Anlagenkomponenten teilen. Durch richtige Dimensionierung der einzelnen Komponenten und geeignete Wahl des verwendeten Übertragungsprotokolls kann dabei weitgehend sichergestellt werden, dass keine Signalanteile bei der Übertragung verloren gehen bzw. schadhaft sind. Nachteilig ist, dass eine Übertragung eines zur Synchronisation verwertbaren Taktsignals über ein solches Medium im Allgemeinen nicht möglich ist.

Durch schwankende Momentanbelastung des Übertragungssystems kommt es nämlich zu Veränderungen der Laufzeiten der Datenpakete, dem Netzjitter. Dieser Effekt wird durch einen sog. Jitterpuffer reduziert, allerdings mit dem Nachteil von zusätzlicher Verzögerung.

Aus WO 95/22233 ist ein Verfahren bekannt, welches diesen Jitter kompensiert. Dabei werden die empfangenen Datenpakete in einem Puffer zwischengespeichert, mit einer Verzögerung versehen und in einem zweiten Puffer weitergeleitet. Der Füllstand des zweiten Puffers wird überwacht und daraus die entsprechende Verzögerung ermittelt, die dann den Datenpaketen im ersten Puffer eingefügt wird. Dieses Verfahren findet Anwendung bei der Sprachübertragung, bei der ohne Einschränkung der Qualität Verzögerungen in Form von "Stille" zwischen einzelnen gesprochenen Wörtern verarbeitet werden können.

Im Falle eines Horchkanals ist aber - anders als bei der Übertragung von Sprache - eine kontinuierliche Audiosignalübertragung notwendig, da die akustischen Signale im Wasser unterbrechungsfrei an der akustischen Antenne auftreffen. Das Einfügen von Datensegmenten, wie z.B. "Stille", würde das Horchergebnis verfälschen.

Aber auch Ungenauigkeiten des Taktgebers können Jitter verursachen. Sowohl die Datenquelle, als auch das Audiowiedergabegerät (z.B. eine herkömmliche Soundkarte) verfügen über einen eigenen Taktgenerator. Selbst bei einem fest definierten Abtastratenverhältnis kommt es durch Bauteiltoleranzen und Temperaturdrift immer wieder zu einem Auseinanderlaufen der beiden Abtastraten der Datensignale vom Sender und vom Empfänger. Dadurch kann es in der Folge entweder zu Aussetzern in der Signalwiedergabe kommen oder Signalanteile müssen verworfen werden. Beides macht sich im Horchkanal durch Knackgeräusche bemerkbar und stört die Arbeit des Operators in einer nicht akzeptablen Weise.

Aus EP 0 987 894 B1 ist ein Verfahren zur Zeitsynchronisation von Sender und Empfänger in Netzanwendungen bekannt. Allerdings lässt sich mit diesem Verfahren kein beliebiges Taktratenverhältnis zwischen Sender und Empfänger synchronisieren, da es keine Abtastratenumsetzung enthält. Es wird davon ausgegangen, dass sowohl Sender als auch Empfänger im Wesentlichen die gleiche Abtastrate aufweisen. Lediglich die Taktdrift wird mit diesem Verfahren ausgeglichen.

Ein weiteres Verfahren zur Abtastratenumsetzung zeigt US 5 475 628 A. Die Eingangsdaten werden in Abhängigkeit der Eingangsdatenrate in einen Direktzugriffsspeicher (RAM) abgelegt. Die Umsetzung der Abtastraten erfolgt hier mittels eines digitalen Integrators, welcher ein Rampensignal erzeugt, dass für die Erzeugung des Ausgangsdatenstroms in Abhängigkeit der geforderten Ausgangsdatenrate verwendet wird.

Ein weiteres Verfahren zur Abtastratenumsetzung zeigt US 6 553 087 81. Die Abtastrate des empfangenen Signals wird mittels eines Bandpassfilters interpoliert, um die Abtastrate des Empfängers mit der Abtastrate des Senders zu synchronisieren.

US 6 061 410 zeigt ein weiteres Verfahren zum Konvertieren eines Eingangssignals mit einer ersten Frequenz in ein Ausgangssignal einer anderen Frequenz. Das System verfügt über zwei Taktgeber, nämlich einen Eingangstakt und einen

Ausgangstakt. Das Eingangssignal wird in einen Eingangspuffer abgelegt und dort mit dem Eingangstakt abgetastet. Ein weiterer Puffer speichert die Daten des Eingangspuffers zum Erzeugen des Ausgangssignals in Abhängigkeit des Ausgangstaktes.

US 2004/0120361 A1 zeigt ein weiteres Verfahren zur Abtastratenumsetzung. Ein asynchroner Abtastratenumwandler filtert eingangsseitig ein erstes digitales Audiosignal und erzeugt daraus ein höher abgetastetes Ausgangssignal. Das Konvertieren erfolgt über eine Umwandlung des digitalen Signals in ein kontinuierliches Zeitsignal, welches dann in einem zweiten Teil des Verfahrens mit der gewünschten Ausgangsabtastfrequenz wiederabgetastet wird.

Der Erfindung liegt nach alledem das Problem zugrunde, eine Echtzeitaudioübertragung über ein beliebiges Übertragungsmedium zu ermöglichen, ohne dass zwischen den Datensignalen des Senders und des Empfängers ein festes Abtastratenverhältnis vorliegt.

Die Erfindung löst dieses Problem durch ein Verfahren bzw. eine Vorrichtung mit den Merkmalen des Anspruchs 1 bzw. 9. Dabei wird durch eine adaptive Abtastratenumsetzung eine störungsfreie Umsetzung der Abtastraten der Datensignale am Empfänger ermöglicht, nämlich die Abtastrate des empfängerseitigen Eingangsdatenstroms und die Abtastrate des empfängerseitigen Ausgangsdatenstroms, auch wenn die Abtastraten auseinanderdriften.

Das erfindungsgemäße Verfahren hat den Vorteil, dass am Empfänger ein Eingangsdatenstrom mit einer ersten, annähernd konstanten Abtastrate anliegen und ein entsprechender Ausgangsdatenstrom aus dem Empfänger geführt werden kann, mit einer zweiten, von der ersten verschiedenen Abtastrate, die von einem externen Taktgeber bzw. Trigger, bspw. einem Audiowiedergabegerät, wie einer Soundkarte, abhängen kann.

Die erfindungsgemäße adaptive Abtastratenumsetzung beinhaltet eine dynamische Steuerung. Dabei wird über einen Puffer mit entsprechenden Pufferschreib- und Pufferlesezeiger das anliegende Abtastenverhältnis bestimmt und über ein digitales Filter für jeden wiederzugebenden Abtastwert ein Ausgangswert berechnet.

Dabei wird der Pufferlesezeiger in einen ganzzahligen Anteil und einen nichtganzzahligen Rest aufgeteilt. Abhängig von dem ganzzahligen Anteil des Pufferlesezeigers wird eine Schätzung des Abtastratenverhältnisses durchgeführt. Abhängig von dem nicht-ganzzahligen Rest werden die Filterkoeffizienten des digitalen Filters berechnet. Diese Filterkoeffizienten werden dabei fortlaufend neu berechnet, d.h. sie sind nicht statisch, sondern dynamisch. Die Verwendung des nicht-ganzzahligen Rests für die Filterkoeffizientenbestimmung ist vorteilhaft, da das geschätzte Abtastratenverhältnis bei beliebigen Abtastratenverhältnissen eine reelle Zahl ist, deren Wert jedoch beim Auslesen des Puffers nur unzureichend berücksichtigt werden kann, da der Pufferlesezeiger immer ganzzahlige Speicherzellen adressieren muss. Der nicht-ganzzahlige Rest der reellen Zahl des geschätzten Abtastratenverhältnisses wird jedoch erfindungsgemäß zur Filterkoeffizientenberechnung verwendet. Insgesamt wird somit das reelle geschätzte Abtastratenverhältnis vollständig verarbeitet.

Erfindungsgemäß wird die Abtastratenumsetzung mit Hilfe eines zeitvarianten Tiefpassfilters geregelt. Dank dieser Maßnahme ist es möglich, den Schätzwert für das Abtastratenverhältnisses zu glätten, um eine gleichmäßige Angleichung der Abtastrate des Eingangsdatenstroms an die Abtastrate des Ausgangsdatenstroms am Empfänger zu erreichen. Hierzu werden der aktuelle Füllstand des Puffers sowie die Historie berücksichtigt, welche die der Filterlänge des Tiefpassfilters entsprechende Anzahl Abtastwerte in Richtung der Vergangenheit im Puffer berücksichtigt.

Das Tiefpaßfilter wird mittels eines digitalen FIR-Filters realisiert. Der Filterblock beinhaltet die für eine FIR-Filterung notwendigen Multiplizierer und Addierer und erhält von außen, z.B. von einem Audiowiedergabegerät, einen Trigger, der direkt die Abtastrate des Ausgangsdatenstroms bestimmt und bei jedem einzelnen Abtastwert einmal anliegt.

Das FIR-Filter besitzt folgende Grenzfrequenz $f_g$:

$$f_g = \begin{cases} \dfrac{f_A}{2} & r \leq 1 \\[2ex] \dfrac{f_A}{2} \cdot \dfrac{1}{r} & r > 1 \end{cases}$$

die abhängig ist, von dem geschätzten Abtastratenverhältnisses $r$.

Neben dem Frequenzgang ist die Phasenlage des Filters für eine fehlerfreie Wiedergabe von besonderer Bedeutung. Vorteilhafterweise wird dies über einen zeitlichen Bezug erreicht, der über den nicht-ganzzahligen Anteil bzw. Rest, d.h. die Nachkommastellen des Lesezeigers eingeht. Bezogen auf die Abtastwerte im FIFO-Puffer kann die Phasenlage $\Delta t_f$ in einem Bereich von -0.5 bis +0.5 liegen.

Die Implementierung des Filters sieht folge Filterkoeffizienten vor:

$$f[m] = \frac{\sin\left(\pi \cdot \frac{1}{r} \cdot \left(m - \frac{N_f}{2} - \Delta t_f\right)\right)}{\left(\pi \cdot \frac{1}{r} \cdot \left(m - \frac{N_f}{2} - \Delta t_f\right)\right)}$$

wobei $N_f$ die Filterlänge und m ein ganzzahliger Index von 0 ... $N_f$-1 ist.

Auf diese Weise werden die typischen Störungen auf einer von mehreren Teilnehmern genutzten asynchronen Übertragungsstrecke ausgeglichen und die Probleme von zwei unabhängigen Taktquellen im System vollständig kompensiert.

In einer bevorzugten Ausführungsform der Erfindung wird die Abtastraten-umsetzung mit Hilfe eines zeitvarianten Tiefpassfilters geregelt. Dank dieser Maßnahme ist es möglich, den Schätzwert für das Abtastratenverhältnisses zu glätten, um eine gleichmäßige Angleichung der Abtastrate des Eingangsdaten-stroms an die Abtastrate des Ausgangsdatenstroms am Empfänger zu erreichen. Hierzu werden der aktuelle Füllstand des Puffers sowie die Historie berücksichtigt.

In einer weiteren Ausführungsform der Erfindung wird das Tiefpaßfilter mittels eines digitalen FIR-Filters realisiert. Der Filterblock beinhaltet die für eine FIR-Filterung notwendigen Multiplizierer und Addierer und erhält von außen, z.B. von einem Audiowiedergabegerät, einen Trigger, der direkt die Abtastrate des Ausgangsdatenstroms bestimmt und bei jedem einzelnen Abtastwert einmal anliegt.

Das FIR-Filter besitzt folgende Grenzfrequenz $f_g$:

$$fg = \begin{cases} \dfrac{fA}{2}, & r \le 1 \\ \dfrac{fA}{2} \cdot \dfrac{1}{r}, & r > 1 \end{cases}$$

die abhängig ist, von dem geschätzten Abtastratenverhältnisses $r$.

Neben dem Frequenzgang ist die Phasenlage des Filters für eine fehlerfreie Wiedergabe von besonderer Bedeutung. Vorteilhafterweise wird dies über einen zeitlichen Bezug erreicht, der über den nicht-ganzzahligen Anteil bzw. Rest, d.h. die Nachkommastellen des Lesezeigers eingeht. Bezogen auf die Abtastwerte im FIFO-Puffer kann die Phasenlage $\Delta t_f$ in einem Bereich von -0.5 bis +0.5 liegen.

Die Implementierung des Filters sieht folge Filterkoeffizienten vor:

$$\text{f}[m] = \frac{\sin\left(\pi \cdot \frac{1}{r} \cdot \left(m - \frac{Nf}{2} - \Delta tf\right)\right)}{\left(\pi \cdot \frac{1}{r} \cdot \left(m - \frac{Nf}{2} - \Delta tf\right)\right)}$$

wobei $N_f$ die Filterlänge und m ein ganzzahliger Index von 0 ... $N_f$-1 ist.

Eine weitere Ausführungsform der Erfindung sieht andere Implementierungsmöglichkeiten des Filters vor. Die im allg. unendlich ausgedehnte Impulsantwort eines theoretisch optimalen Filters wird bei obiger Implementierung mit einem Rechteck-Fenster abrupt abgebrochen. Dies führt zu Oszillationen im Durchlass wie im Sperrbereich. Will man das Durchlass- und Sperrverhalten verbessern, muss man Fensterfunktionen verwenden, die reduzierte Oszillationen im Spektralbereich aufweisen. Vorteilhaft sind hier bekannte Fenster wie z.B. Hamming-, Hann-, Blackman- oder Kaiser-Fenster. Die Filterkoeffzienten der obigen Implementierung werden daher vorteilhaft mit derartigen Fensterfunktionen multipliziert.

In einer weiteren Ausführungsform der Erfindung werden die übermittelten Datenströme mit der Eingangsdatenrate am Empfänger mittels eines Pufferschreibzeigers in den FIFO-Puffer geschrieben. Der FIFO-Puffer wird dabei vorzugsweise als Ringspeicher ausgelegt. Er ist gekennzeichnet durch seine Größe und einen Pufferschreibzeiger. Ein derartiger Puffer ist vorteilhaft implementierbar.

Vorzugsweise liegt zwischen dem Pufferschreib- und dem Pufferlesezeiger ein vorgegebener Sollabstand. Dadurch erfüllt der Puffer seine Funktion als De-Jitterpuffer und gleicht schwankende Datendurchlaufzeiten auf dem Übertragungsnetz aus. Dadurch ist ein kontinuierliches, unterbrechungsfreies Auslesen des Speichers sichergestellt. Allerdings muss dafür der Start des Auslesens verzögert werden. Dies geschieht indem beim Start des Systems der Wert des geschätzten Abtastratenverhältnisses r zunächst auf Null gesetzt wird. Sobald der Puffer seinen Sollwert erreicht bzw. überschritten hat, wird r gemäß den erwarteten Werten für die Abtastraten (Sollwerte) gewählt:

$$r = \frac{fA}{fDAC}$$

In einer weiteren Ausführungsform der Erfindung wird die Abtastratenumsetzung dynamisch gesteuert. Vorzugsweise wird der Wert r für das geschätzte Abtastratenverhältnisses der Abtastrate des Eingangsdatenstroms und der Abtastrate des Ausgangsdatenstroms einer Anpassung unterzogen. Mit Hilfe eines rückgekoppelten Filters wird der Wert r folgendermaßen variiert:

- Ist der Abstand zwischen Pufferschreib- und Pufferlesezeiger zu groß, wird r erhöht.
- Ist der Abstand zwischen Pufferschreib- und Pufferlesezeiger zu klein, wird r verringert.

Dieses rückgekoppelte Filter kann dabei linear oder nicht-linear sein. Allerdings ist darauf zu achten, dass Veränderungen des Wertes r sehr behutsam vorzunehmen sind, da dieser Wert über die Filterung direkten Einfluss auf das wiedergegebene Signal hat. Da aus technologischer Sicht keine beliebigen Abweichungen möglich sind, ist es vorteilhaft die Grenzen des geschätzten Abtasratenverhältnisses r, d.h. Minimal- bzw. Maximalwert vorher zu definieren. Durch diese Eingrenzung kann die Qualität der Regelung verbessert werden.

Darüber hinaus wird das Leerlaufen des Puffers erkannt, indem der Abstand zwischen Pufferschreib- und Pufferlesezeiger näherungsweise Null wird. In einem solchen Fall verhält sich der Abtastratenverhältnisschätzer vorzugsweise wie bei einem Neustart. Demgegenüber muss bei einem drohenden Überlauf der Wert r zügig erhöht werden.

Dabei handelt es sich um eine Echtzeitaudioübertragung.

In einer weiteren Ausführungsform der Erfindung handelt es sich vorzugsweise um eine Passiv-Sonaranlage, bei der Audiodaten in Echtzeit über das Kommunikationsnetz übertragen werden. Sie dient zur Peilung von schallabstrahlenden Zielen unter Verwendung einer auf einem Antennenträger festgelegten Empfangsantenne mit einer Vielzahl von Wandlern zum Empfang von Schallwellen.

Die Empfangssignale werden einer Signalverarbeitung unterzogen, welche zunächst die Bildung konphaser Empfangssignale mittels Zeitverzögerungskoeffizienten beinhaltet. Anschließend werden die konphasen Empfangssignale zu Gruppensignalen addiert, welche durch Peilwinkel definierte Peilrichtungen angeben. Dabei werden die Pegel der Gruppensignale in Zuordnung zu den Peilwinkeln erfasst und der sich ergebene Pegelverlauf über die Peilwinkel als Zielpeilung ausgegeben.

Die Audiosignale des oben genannten Horchkanals durchlaufen eine derartige Signalverarbeitung. Nach der Übertragung über das Kommunikationsnetz liegen sie am Empfänger mit einer ersten Abtastrate als Eingangsdatenstrom an und werden vom Empfänger mit einer zweiten, von der ersten Abtastrate verschiedenen Abtastrate als Ausgangsdatenstrom an ein Audiowiedergabegerät ausgegeben.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:

Fig. 1   ein Blockschaltbild eines Ausführungsbeispiels der Erfindung, nämlich den Übertragungsweg eines Horchkanals, mit einem Sender, einem Kommunikationsnetz sowie einem Empfänger mit anschließender Audiowiedergabe;

Fig.2   ein Blockschaltbild einer im Empfänger gemäß Fig. 1 vorgesehenen adaptiven Abtastratenumsetzung;

Fig.3   eine Übertragungsfunktion eines idealen Tiefpasses und

Fig.4   ein Blockschaltbild zur Veranschaulichung einer dynamischen Steuerung eines geschätzten Abtastratenverhältnisses über einen Pufferlesezeiger und einen Pufferschreibzeiger.

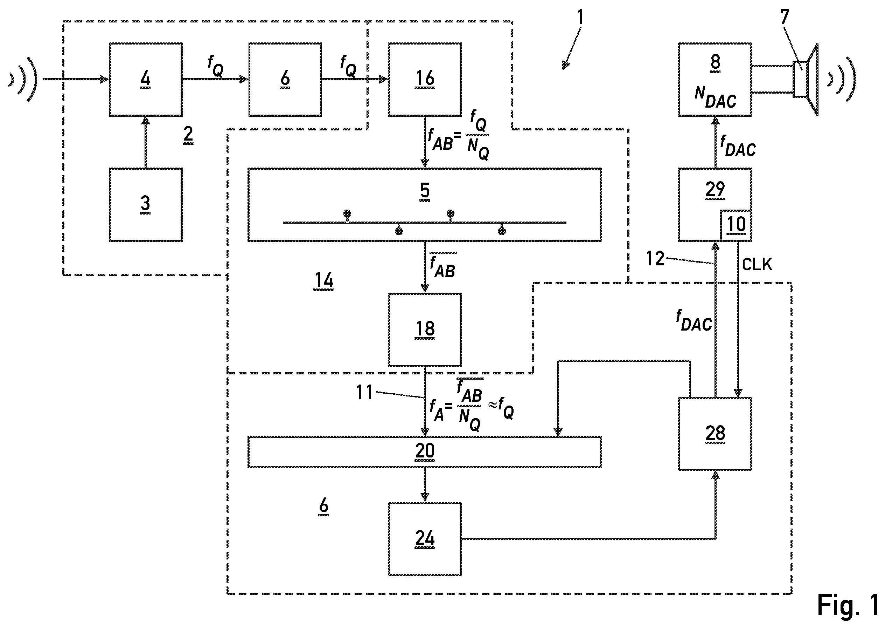

Fig. 1 zeigt ein Blockschaltbild zur Erläuterung eines Übertragungssystems 1 für Audiodaten eines Horchkanals in einer Sonaranlage gemäß einem Ausführungsbeispiel der Erfindung. Dieses Übertragungssystem ist jedoch auch bei anderen Echtzeitaudioübertragungen anwendbar.

Gegeben ist eine digitale Echtzeit-Audiosignalquelle 2, welche ein digitales Audiosignal mit der Abtastrate fO liefert. Die Audiosignalquelle 2 weist einen Taktgenerator 3 auf, der die Abtastrate fO bestimmt. Als Datenquelle sind grundsätzlich alle Signale möglich, die mit einer konstanten Abtastrate abgetastet werden. Im dargestellten Ausführungsbeispiel handelt es sich um eine Sonarantenne 4, deren Ausgangsdaten zunächst eine Signalverarbeitung 6 zur Richtungsbildung durchlaufen zur Generierung von akustischen Signalen, denen eine Hauptempfangsrichtung zugeordnet ist. Diese Richtungsbildung ist bspw. im Lehrbuch "Einführung in die Physik und Technik der Unterwasser-Schallsysteme/Introduction to the Physics and Engineering of Underwater Acoustic Systems" von Manfred Siegel, 2005, erschienen im Eigenverlag der Atlas Elektronik GmbH, Kapitel 5 "Raumfilterung/Space Filtering", erläutert.

Die Audiosignalquelle 2 ist vorliegend auch als Sender zu verstehen, der Daten über eine Übertragungsstrecke, insbesondere ein Kommunikationsnetz 5, zu einem Empfänger 6 sendet.

Die analoge Wiedergabe des Signals erfolgt empfangsseitig mittels eines dem Empfänger 6 nachgeschalteten Lautsprechers 7 nebst Digital/Analog-Wandler 8, der mit einem eigenen, vom Sender unabhängigen Takt CLK betrieben wird. Dieser Takt wird von einem vom Taktgenerator 3 unabhängigen Taktgenerator 10 erzeugt. Dadurch dass die beiden Taktgeneratoren 3 und 10 ein beliebiges Taktverhältnis zueinander haben können, ist das sich am Empfänger 2 einstellende Abtastraten-verhältnis der Abtastrate $f_A$ eines dem Empfänger 6 zugeführten Eingangsdatenstroms 11 und der Abtastrate $F_{DAC}$ eines vom Empfänger 6 ausgegebenen Ausgangsdatenstroms 12 ebenfalls beliebig.

Zwischen der Audiosignalquelle 2 und dem Empfänger 6 befindet sich eine Übertragungsstrecke 14, in diesem Fall eine asynchrone Übertragungsstrecke, wie z.B. das Ethernet. Dabei wird der von der Audiosignalquelle 2 generierte Audiodaten-strom in einem Paketsender 16 zu Paketen einer einstellbaren Größe zusammen-gefasst. Somit werden Pakete mit einer Paketgröße von je $N_Q$ Abtastwerten pro Kanal über das Kommunikationsnetz 5 übertragen, wobei die Paketrate

$$f_{AB} = \frac{f_Q}{N_Q}$$

beträgt. Nach der Übertragung über das Kommunikationsnetz 5 gelangen die übertragenen Pakete an einen Paketempfänger 18, der die Pakete sammelt und ggf. wieder ordnet und bei Übertragungsfehlern nochmals zur erneuten Übertragung anfordert. Der Paketempfänger 18 empfängt die Pakete mit einer mittleren Datenpaketrate $f_{AB}$, die im zeitlichen Mittel der Paketrate $f_{AB}$ entspricht. T man die Datenpaketrate $f_{AB}$ durch die Paketgröße $N_Q$ erhält man die sog. Eingangsabtastrate des Signals im Paketempfänger 18, die ungefähr der Abtastrate $f_Q$ entspricht, zumindest wenn die Datenübertragung ohne Verlust von Daten bzw. Datenpaket erfolgt.

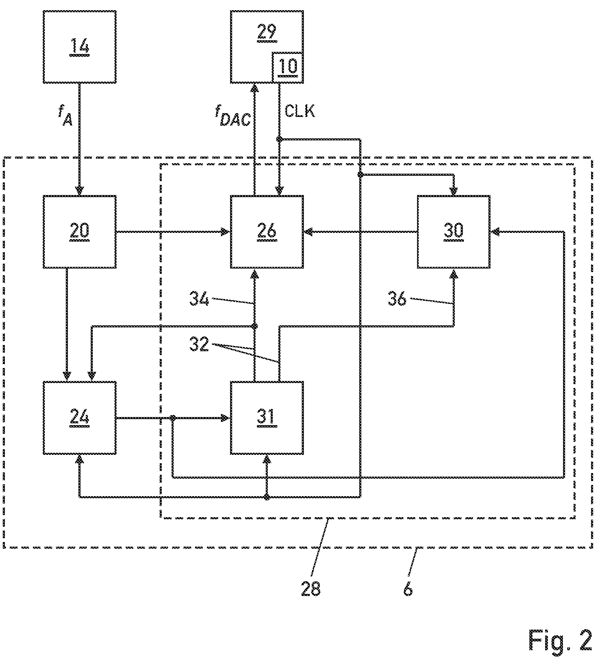

Fig. 2 veranschaulicht die genaue Funktionsweise der adaptiven Abtastraten-regelung im Empfänger 6. Zunächst werden die von der Übertragungsstrecke 14 eingehenden Daten mit der Eingangsdatenrate $f_A$ in einen FIFO-Puffer 20 geschrieben. Dieser wird als Ringspeicher ausgelegt und ist gekennzeichnet durch seine Größe und einen Pufferschreibzeiger. Dabei ist es durchaus möglich, die einzelnen Abtastwerte auch weiterhin zu Paketen zusammengefasst zu behandeln.

Die tatsächlich verwendete Paketgröße ist hierbei ein Kompromiss zwischen der Signalverzögerung und der Reduktion von übertragungsbedingtem Overhead, d.h. Verwaltungsdaten.

Da das Kommunikationsnetz 5 einem stochastischer Netzjitter bzgl. der Übertra-gungszeiten unterworfen ist, unterliegt auch die Eingangsdatenrate $f_A$ Schwankungen. Im Mittel ist sie aber direkt von der Abtastrate $f_Q$ des Senders 2 abhängig.

Eine ideale Abtastratenumsetzung würde nun aus den Eingangsdaten ein analoges Signal erzeugen und dieses dann mit einer um den Faktor

$$\frac{f_{DAC}}{f_A}$$

veränderten Abtastrate wieder digitalisieren.

Das Verhalten eines solchen idealen Umsetzers wird bevorzugt jedoch in digitaler
Form durch eine entsprechende zeitvariante Tiefpassfilterung mit hinreichender Güte nachgebildet.

Über den Füllstand des FIFO-Puffers 20 schätzt ein Abtastratenverhältnisschätzer 24 das einzustellende Abtastratenverhältnis. Im Idealfall erreicht der Füllstand einen vordefinierten Sollwert. Unterschreitet der Füllstand hingegen diesen Sollwert, dann ist der Schätzwert r für das Abtastratenverhältnis zu gering:

$$r < \frac{f_A}{f_{DAC}}$$

Überschreitet der Füllstand den Sollwert, ist der Schätzwert r zu hoch:

$$r > \frac{f_A}{f_{DAC}}$$

Der auf diese Weise ermittelte Schätzwert r des Abtastratenverhältnisses wird einem im Empfänger 6 vorgesehenen Abtastratenumsetzer 28 zugeführt, der ein digitales Filter 26 der Filterlänge Nf, eine Filterkoeffizientenberechnungseinheit 30 und eine Lesezeigerberechnungseinheit 31 zur Berechnung eines Pufferlesezeigers 32 aufweist.

Die Aufgabe des digitalen Filters 26 im Abtastratenumsetzer 28 besteht darin, unter Berücksichtigung des aktuellen Füllstands sowie einer der Filterlänge $N_f$ entsprechenden Anzahl der im FIFO-Puffer 20 abgelegten Werte den Ausgangsdatenstrom 12 mit einer Abtastrate $f_{DAC}$ zu erzeugen, die von der Abtastfrequenz des Eingangsdatenstroms 11 abweicht. Dabei wird die Abtastrate durch den Takt CLK vorgegeben, kann jedoch auch ein Vielfaches oder ein Bruchteil des Taktes CLK betragen.

Fig. 2 zeigt die wesentlichen Komponenten einer adaptiven Abtastratenumsetzung. Das digitale Filter 26 beinhaltet die für eine FIR-Filterung notwendigen Multiplizierer und Addierer. Von einem Audiogerätetreiber 29 bzw. dessen Taktgenerator 10 erhält das Filter 26 ein Taktsignal CLK, das die Abtastrate $f_{DAC}$ des Ausgangsdatenstroms 12 bestimmt und bspw. für jeden wiederzugebenden Abtastwert im Ausgangsdatenstrom einmal anliegt.

Die Filterkoeffizientenberechnungseinheit 30 berechnet auf Basis eines Tiefpasses die Filterkoeffizienten des Filters 26, bevor das Filter einen Ausgangswert für den Ausgangsdatenstrom berechnet.

Wie bereits erwähnt, könnte idealerweise eine Abtastratenumsetzung über eine Analogwandlung des Signals mit anschließender Digitalisierung realisiert werden. Dadurch würde das Signal möglichst breitbandig und unverfälscht wiedergegeben werden. Das zu realisierende digitale FIR-Filter 26 hat die Aufgabe, dieses Verhalten digital nachzubilden.

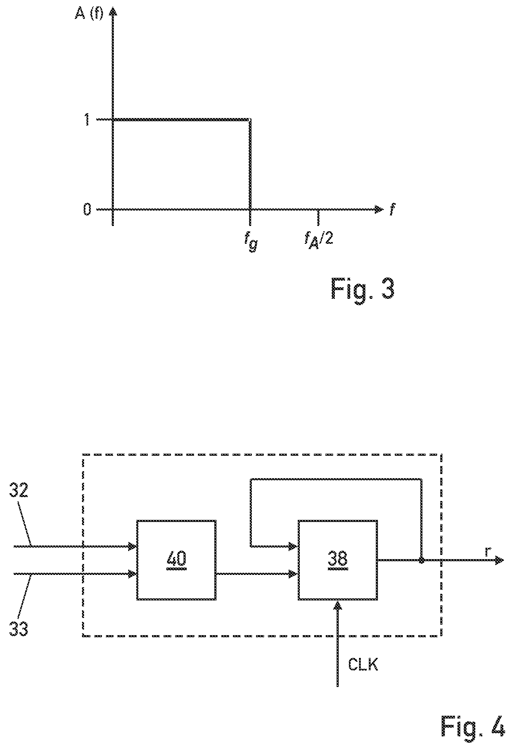

Fig. 3 zeigt ein entsprechendes Übertragungsverhalten eines idealen Tiefpasses. Dabei ist die Übertragungsfunktion A(f) über die Frequenz f aufgetragen. Der ideale Tiefpass besitzt demnach eine Übertragungsfunktion, die für Frequenzen unterhalb einer Grenzfrequenz $f_g$ die Bedingung für ein verzerrungsfreies System erfüllt. Oberhalb dieser Grenzfrequenz $f_g$ erstreckt sich der Sperrbereich, in dem die Übertragungsfunktion zu Null wird.

Für das zu realisierende FI R-Filter 26 wird folgende Grenzfrequenz $f_g$ verwendet:

$$fg = \begin{cases} \dfrac{fA}{2}, f\ddot{u}r \ r \le 1 \\ \dfrac{fA}{2} \cdot \dfrac{1}{r}, f\ddot{u}r \ x > 1 \end{cases}$$

Außerdem wird für die Berechnung der Filterkoeffizienten 30 der Pufferlesezeiger 32 benötigt, mit dem der FIFO-Puffer 20 ausgelesen wird und der eine Speicherzelle des Puffers 20 adressiert. Dieser Pufferlesezeiger 32 lässt sich aufteilen in einen ganzzahligen Anteil 34 und einen verbleibenden nicht-ganzzahligen Anteil 36 (Rest).

Um auch die Phasenlage des Filters 26 zu berücksichtigen, geht auch der nichtganzzahlige Anteil 36 des Pufferlesezeigers 32 in die Berechnung der Filterkoeffizienten ein. Das ist für eine fehlerfreie bzw. fehlerarme Wiedergabe des Audiosignals von besonderer Bedeutung. Bezogen auf die Abtastwerte im FIFO-Puffer 20 kann dieser nicht-ganzzahlige Anteil 36 $\Delta t_f$ in einem Bereich von -0.5 bis +0.5 liegen.

Eine bevorzugte Implementierung des digitalen Filters 26 mit einer Filterlänge $N_f$ und einem ganzzahligen Index m von 0 ... $N_f$-1 sieht folgende Filterkoeffizienten vor:

$$f[m] = \frac{\sin\left(\pi \cdot \dfrac{1}{r} \cdot \left(m - \dfrac{Nf}{2} - \Delta tf\right)\right)}{\left(\pi \cdot \dfrac{1}{r} \cdot \left(m - \dfrac{Nf}{2} - \Delta tf\right)\right)}$$

Der Ausgangswert des Filters 26 wird berechnet, indem - vom Pufferlesezeiger 32 ausgehend - die der Filterlänge Nf entsprechende Anzahl Abtastwerte in Richtung der Vergangenheit eingelesen, mit den Filterkoeffizienten multipliziert und addiert werden. Dies geschieht für jeden wiederzugebenden Abtastwert einzeln.

Für die Audiowiedergabe wird der Digital-/Analogwandler 8, z.B. als Teil einer sog. Soundkarte verwendet, welche mit einer Datenblockgröße von $N_{DAC}$ betrieben wird. In diesem Fall werden nun mit Hilfe der adaptiven Abtastratenumsetzung Signalblöcke mit einer Länge von $N_{DAC}$ Abtastwerten und einer Abtastrate $f_{DAC}$ erzeugt. Dabei werden nach jeder Generierung eines Datenblocks für die Wiedergabe die ältesten Eingangsdaten, die für die Bildung weiterer Blöcke nicht mehr relevant sind, aus dem Puffer 20 entfernt bzw. als veraltet gekennzeichnet bzw. zum Überschreiben freigegeben.

Die Berechnung des Pufferlesezeigers 32 ist ein wesentlicher Bestandteil der adaptiven Abtastratenregelung. Diese Berechnung erfolgt in der Lesezeigerberechnungseinheit 31. Sie wird für jeden wiederzugebenden Abtastwert einzeln ausgeführt. Die Zeigerposition berechnet sich aus dem letzten reellen Zeigerwert $P_{old}$ zu dem der reelle Schätzwert r des Abtastratenverhältnisses hinzuaddiert wird:

$$P \ new = P \ old + r$$

Ist der neue Wert größer als die maximale Länge des FIFO-Puffers 20, wird gemäß dem Ringspeicherprinzip die Länge des FIFO-Puffers 20 abgezogen. Dieser neue Wert ist der "alte" Abtastzeitpunkt im nächsten Zyklus.

Der Wert r stellt dabei den Schätzwert des Abtastratenverhältnis zwischen der Abtastrate des Eingangsdatenstroms $f_A$ und der Abtastrate des Ausgangsdatenstroms $f_{DAC}$ am Empfänger dar. Über diesen Wert r findet eine dynamische Steuerung der Abtastratenumsetzung 28 statt.

Die Berechnung des Schätzwertes r erfolgt in Abhängigkeit vom Abstand zwischen dem Pufferschreibzeiger und dem ganzzahligen Anteil 34 des errechneten Pufferlesezeigers 32, wobei hier immer davon ausgegangen wird, dass der Pufferschreibzeiger dem Pufferlesezeiger 32 vorauseilt.

Zwischen den beiden Zeigern gibt es einen Sollabstand, der z.B. im Bereich einer halben Pufferlänge liegen kann. Dadurch wird allerdings die systembedingte Signalverzögerung erhöht, weshalb dieser Sollabstand möglichst klein gehalten werden sollte. Auf der anderen Seite ist ein hinreichend großer Sollabstand notwendig, um den Netzjitter der Übertragungsstrecke 14 auszugleichen. Ein entsprechender Kompromiss muss bei der Wahl des Sollabstands eingegangen werden.

Beim Start des Systems wird der Wert *r* zunächst auf Null gesetzt. Sobald der FIFO-Puffer den Sollwert erreicht bzw. überschritten hat. wird *r* gemäß den erwarteten Werten für die Abtastraten (Sollwerte) gewählt:

$$r = \frac{f_A}{f_{DAC}} \ .$$

Wenn die tatsächlichen Abtastraten von Eingangs- und Ausgangsdatenstrom 11 bzw. 12 am Empfänger 6 den Vorgaben $f_A$ und $f_{DAC}$ exakt entsprechen würden, dann wäre keine weitere Regelung erforderlich. Aufgrund von Bauteiltoleranzen, Temperaturdrift und Alterungsprozessen trifft dies in realen Systemen jedoch nicht zu. Daher laufen der Pufferschreib- 22 und der Pufferlesezeiger 32 tatsächlich auseinander. Im Abtastratenverhältnisschätzer 24 findet deshalb noch eine Anpassung statt. Diese wird anhand von Fig. 4 näher erläutert:

Fig. 4 zeigt den Abtastratenverhältnisschätzer 24, das einrückgekoppeltes Regelungsfilter 38 sowie eine Zeigerabstandsbestimmungseinheit 40, der der Pufferlesezeiger 32 und der Pufferschreibzeiger 33 zugeführt wird.

Mittels eines rückgekoppelten Regelungsfilters 38 wird der Wert *r* des Abtastratenverhältnisses der Abtastraten von Eingangs- und Ausgangsdatenstrom am Empfänger entsprechend folgender Vorgaben angepasst:

-  Ist der Abstand zwischen Pufferschreib- 33 und Pufferlesezeiger 32 zu groß, muss *r* erhöht werden.
-  Ist der Abstand zwischen Pufferschreib- 33 und Pufferlesezeiger 32 zu klein, muss *r* verringert werden.

Ziel dieser Regelung ist es, den über den Abtastratenumsetzer 28 gesteuerten Pufferfüllstand im Mittel im Bereich des Sollwerts zu halten, ohne dass die Wiedergabe dabei hörbaren Störungen unterworfen ist.
Das Regelungsfilter 38, mit dem der Wert *r* im normalen Regelungsfall variiert wird, kann linear oder nicht-linear sein. Dabei ist zu beachten, dass Veränderungen des Wertes *r* sehr behutsam vorzunehmen sind, da dieser Wert über die Filterung direkten Einfluss auf das wiedergegebene Signal hat. Das Regelungsfilter 38 hat daher auch die Aufgabe, den Schätzwert r zu glätten, um eine gleichmäßige Taktratenumsetzung zu ermöglichen. Diese Glättung wird durch eine Auslegung des Regelungsfilters 38 als Tiefpass erreicht. Da aus technologischer Sicht sind keine beliebigen Abweichungen möglich sind, können die Grenzen des Wertes *r,* d.h. ein Minimal- bzw. Maximalwert vorher definiert werden. Durch diese Eingrenzung kann die Qualität der Regelung verbessert werden.
Das Leerlaufen des FIFO-Puffers 20 wird darüber erkannt, dass der Abstand zwischen Pufferschreibzeiger 33 und Pufferlesezeiger 32 näherungsweise Null wird. In einem solchen Fall verhält sich der Abtastratenverhältnisschätzer 24 so wie bei einem Neustart. Demgegenüber muss bei einem drohenden Überlauf des Puffers 20 der Wert r sehr zügig erhöht werden.
Dank der Erfindung kann eine Echtzeitaudioübertragung eines kontinuierlichen Audiosignals im Wesentlichen störungsfrei übertragen werden. Aussetzer, wie z.B. Knack-Geräusche und dergleichen, welche herkömmlicherweise durch Pufferüberläufe bzw. -leerläufe auftreten können, werden dank der Erfindung vermieden. Dies ist insbesondere deshalb vorteilhaft, da der sendeseitige Taktgenerator und der empfangsseitige Taktgenerator nicht miteinander synchronisiert sind, sondern unabhängig voneinander laufen und daher daraus abgeleitete Abtastraten auseinanderdriften.

**Patentansprüche**

1.  Verfahren zum Kompensieren von Schwankungen von Abtastraten $f_A$, $f_{DAC}$ welche einem an einem Empfänger (6) anliegenden Eingangsdatenstrom (11) und einem von dem Empfänger (6) ausgegebenen Ausgangsdatenstrom (12) zugrunde liegen, wobei der Eingangsdatenstrom (11) zunächst über ein Netzjitter verursachendes Kommunikationsnetz (5) übertragen und danach am Empfänger (6) in einem Puffer (20) zwischengespeichert wird, dessen Füllstand mittels eines Pufferlesezeigers (32) überwacht und im Bereich eines Sollwertes gehalten wird, **dadurch gekennzeichnet, dass** der Pufferlesezeiger (32) einen reellen Zeigerwert besitzt und in einen ganzzahligen Anteil (34) und einen nicht-ganzzahligen Anteil (36) aufgeteilt wird, ein Schätzwert r eines Abtastratenverhältnisses und der Abtastrate $f_{DAC}$ des Ausgangsdatenstroms abhängig von dem ganzzahligen Anteil (34) des Pufferlesezeigers (32) ermittelt wird, die adaptive Abtastratenumsetzung (28) mittels eines digitalen Filters (26) mit dynamisch variablen Filterkoeffizienten f[m] ausgeführt wird, wobei die Filterkoeffizienten (f[m]) abhängig vom nicht-ganzzahligen Anteil (36) des Pufferlesezeigers (32) berechnet werden, das digitale Filter (26) einem zeitvariantem Tiefpassfilters mit einer Filterlänge (N,) gleichkommt, welches mittels des ganzzahligen Anteils (34) des Pufferlesezeigers (32) den aktuellen Füllstand des Puffers (20) sowie die der Filterlänge (N,) entsprechende Anzahl Abtastwerte in Richtung der Vergangenheit im Puffer (20) berücksichtigt und die Abtastratenumsetzung (28) mittels eines FIR-Filters (26) vorgenommen wird, welches eine Grenzfrequenz fg

$$f_g = \begin{cases} \dfrac{f_A}{2} & r \leq 1 \\[2ex] \dfrac{f_A}{2} \cdot \dfrac{1}{r} & r > 1 \end{cases}$$

und folgende Filterkoeffizienten f[m]

$$f[m] = \frac{\sin\left(\pi \cdot \dfrac{1}{r} \cdot \left(m - \dfrac{N_f}{2} - \Delta t_f\right)\right)}{\left(\pi \cdot \dfrac{1}{r} \cdot \left(m - \dfrac{N_f}{2} - \Delta t_f\right)\right)}$$

aufweist, wobei $r = f_A/f_{DAC}$ gilt und $f_A$ die Abtastrate des Eingangsdatenstroms, r das geschätzte Abtastratenverhältnis, Nf die Filterlänge, mein ganzzahliger Index von 0 bis N, -1 und I1f, der nicht-ganzzahlige Anteil (36) des Pufferlesezeigers sind.

**2.** Verfahren nach Anspruch 1,
**dadurch gekennzeichnet, dass**
die Filterkoeffizienten f[m] des Filters (26) mit einer Fensterfunktion multipliziert werden, wobei die Fensterfunktion insbesondere ein Rechteck-Fenster, ein Hann-Fenster, ein Hamming-Fenster, ein Blackman-Fenster oder ein Kaiser-Fenster ist.

**3.** Verfahren nach einem der vorherigen Ansprüche,
**dadurch gekennzeichnet, dass**
der Eingangsdatenstrom (11) mit der ihm zugrunde liegenden Abtastrate $f_{DAC}$ am Empfänger (6) mittels eines Pufferschreibzeigers (33) in den als FIFO-Ringpuffer ausgebildeten Puffer (20) geschrieben wird.

**4.** Verfahren nach einem der vorherigen Ansprüche,
**dadurch gekennzeichnet, dass**
der Schätzwert r des Abtastratenverhältnisses aufgrund eines ermittelten Abstandes zwischen dem Pufferschreibzeiger (33) und dem ganzzahligen Anteil (34) des Pufferlesezeigers (32) ermittelt wird.

**5.** Verfahren nach einem der vorherigen Ansprüche,
**dadurch gekennzeichnet, dass**
der Schätzwert r des Abtastratenverhältnisses mittels eines rückgekoppelten Filters (42) ermittelt wird.

**6.** Verfahren nach einem der vorherigen Ansprüche,
**dadurch gekennzeichnet, dass**
über das Kommunikationsnetz (5) Audiodaten in Echtzeit übertragen und empfangsseitig als analoge Audiosignale (8) wiedergegeben werden.

**7.** Vorrichtung zur Kompensierung von Schwankungen von Abtastraten $f_A$, $F_{DAC}$, welche einem an einem Empfänger (6) anliegenden Eingangsdatenstrom (11) und einem von dem Empfänger (6) ausgegebenen Ausgangsdatenstrom (12) zugrunde liegen, wobei der Eingangsdatenstrom (11) zunächst über ein Netzjitter verursachendes Kommunikationsnetz (5) übertragbar und danach am Empfänger (6) in einem Puffer (20) zwischenspeicherbar ist, dessen Füllstand mittels eines Pufferlesezeigers (32) überwachbar und im Bereich eines Sollwertes regelbar ist,
**gekennzeichnet durch**
eine Pufferlesezeigerberechnungseinheit (31) zum Aufteilen des Pufferlesezeigers (32), welcher einen reellen Zeigerwert besitzt, in einen ganzzahligen (34) und einen nichtganzzahligen Anteil (36),
eine Empfängereinheit (6) zum Verarbeiten eines Abtastratenverhältnises von Abtastrate $f_A$ des Eingangsdatenstroms und Abtastrate $f_{DAC}$ des Ausgangsdatenstroms (12),ein Abtastratenschätzer (24) zum Ermitteln eines Schätzwerts r des Abtastratenverhältnisses zum Steuern einer adaptiven Abtastratenumsetzung (28) zur Umsetzung der Abtastrate $f_A$ des Eingangsdatenstroms und der Abtastrate $f_{DAC}$ des Ausgangsdatenstroms abhängig von dem ganzzahligen Anteil (34) des Pufferlesezeigers (32), ein digitales Filter (26) zum Ausführen einer adaptiven Abtastratenumsetzung (28), wobei die dynamisch variablen Filterkoeffizienten f[m] des digitalen Filters (26) in Abhängigkeit vom nicht-ganzzahligen Anteil (36) des Pufferlesezeigers (32) berechenbar sind,
ein zeitvariantes Tiefpassfilter mit einer Filterlänge Nf als digitales Filter (26) zum Ausführen einer adaptiven Abtastratenumsetzung (28), wobei mittels des ganzzahligen Anteils (34) des Pufferlesezeigers (32) der aktuelle Füllstand sowie die der Filterlänge (Nf) entsprechende Anzahl Abtastwerte in Richtung der Vergangenheit im Puffer (20) berücksichtigbar sind,
ein FIR-Filter (26) zum Ausführen einer adaptiven Abtastratenumsetzung, mit einer Grenzfrequenz fg

$$f_g = \begin{cases} \dfrac{f_A}{2} & r \leq 1 \\[2em] \dfrac{f_A}{2} \cdot \dfrac{1}{r} & r > 1 \end{cases}$$

und folgenden Filterkoeffizienten f[m]

$$f[m] = \frac{\sin\left(\pi \cdot \dfrac{1}{r} \cdot \left(m - \dfrac{N_f}{2} - \Delta t_f\right)\right)}{\left(\pi \cdot \dfrac{1}{r} \cdot \left(m - \dfrac{N_f}{2} - \Delta t_f\right)\right)},$$

wobei $r = f_A/f_{DAC}$ ist und $f_A$ die Eingangsdatenrate, r das geschätzte Abtastratenverhältnis, Nf die Filterlänge, m der ganzzahliger Index von 0 bis Nf -1 und $\Delta t_f$ der nicht-ganzzahlige Anteil des Pufferlesezeigers sind.

**8.** Vorrichtung nach Anspruch 7,
**gekennzeichnet durch**
einen Puffer (20), insbesondere ein FIFO-Ringpuffer, zum Speichern des Eingangsdatenstroms (11), welcher mit der ihm zugrunde liegenden Abtastrate $f_A$ über einen Pufferschreibzeiger (33) in den Puffer (20) schreibbar ist.

**9.** Vorrichtung nach einem der Ansprüche 7 bis 8,
**gekennzeichnet durch**
eine Steuerungseinheit (24) zum dynamischen Steuern der Abtastratenumsetzung, der der ermittelte Abstand zwischen dem Pufferschreibzeiger (33) und dem ganzzahligen Anteil (34) des Pufferlesezeigers (32) zu Grunde liegt.

10. Vorrichtung nach einem der Ansprüche 7 bis 9, **gekennzeichnet durch** eine Steuerungseinheit (24) zum dynamischen Steuern der Abtastratenumsetzung mittels eines rückgekoppelten Filters (38).

11. Sonaranlage mit einer Vorrichtung nach einem der Ansprüche 7 bis 10 und/oder zur Durchführung eines Verfahrens nach einem der Ansprüche 1 bis 6, wobei der am Empfänger (6) anliegende Eingangsdatenstrom (11) Abtastwerte eines Audiosignals eines Horchkanals mit einer ersten Abtastrate $f_A$ und der am Empfänger (6) anliegende Ausgangsdatenstrom (12) Abtastwerte eines ausgegebenen Audiosignals mit einer zweiten, von der ersten Abtastrate verschiedenen Abtastrate $f_{DAC}$ enthält.

**Claims**

1. Method for compensating fluctuations of scanning rates $f_A$, $f_{DAC}$ which form the basis for an input data flow (11) applied on a receiver (6) and for an output data flow (12) outputted by the receiver (6), wherein the input data flow (11) is at first transmitted via a communication network (5) causing network jitter and subsequently is intermediately stored in the receiver (6) in a buffer (20) whose level is monitored by a buffer read pointer (32) and is held in the area of a theoretical value,
   **characterized by that**
   the buffer read pointer (32) has a real pointer value and is divided into a whole-number component (34) and a non-whole-number component (36),
   an estimated value r of a scanning rate ratio and of the scanning rate $f_A$ of the output data flow is determined depending on the whole-number component (34) of the buffer read pointer (32), the adaptive scanning rate conversion (28) is carried out by a digital filter (26) with dynamically variable filter coefficients f[m], wherein the filter coefficients (f[m]) are calculated depending on the non-whole-number component (36) of the buffer read pointer (32),
   the digital filter (26) equals a time-variant low-pass filter with a filter length (N,) which takes into account by means of the whole-number component (34) of the buffer read pointer (32) the current level of the buffer (20) and the number of scanning values corresponding to the filter length (N,) in the direction of the past in the buffer (20) and the scanning rate conversion (28) is carried out by an FIR filter (26) which has a cut-off frequency fg

$$f_g = \begin{cases} \dfrac{f_A}{2} & r \le 1 \\[2mm] \dfrac{f_A}{2} \cdot \dfrac{1}{r} & r > 1 \end{cases}$$

and the following filter coefficients f[m]

$$f[m] = \frac{\sin\left(\pi \cdot \dfrac{1}{r} \cdot \left(m - \dfrac{N_f}{2} - \Delta t_f\right)\right)}{\left(\pi \cdot \dfrac{1}{r} \cdot \left(m - \dfrac{N_f}{2} - \Delta t_f\right)\right)}$$

wherein r= $f_A$/ $f_{DAC}$ and $f_A$ is the scanning rate of the input data flow, r is the estimated scanning rate ratio, Nf is the filter length, m is a whole number index from 0 to N, -1 and |1f is the non-whole-number component (36) of the buffer read pointer.

2. Method according to Claim 1,
   **characterized by that**
   the filter coefficients f[m] of the filter 26 are multiplied by a window function, wherein the window function is in particular a rectangular window, a Hann window, a Hamming window, a Blackman window or a Kaiser window.

3. Method according to one of the previous claims,
   **characterized by that**
   the input data flow (11) with the scanning rate $F_{DAC}$ forming its basis on the receiver (6) is written with a buffer write pointer (33) into the buffer (20) constructed as a FIFO annular buffer.

4. Method according to one of the previous claims,
   **characterized by that**
   the estimated value r of the scanning rate ratio is determined based on a determined interval between the buffer write pointer (33) and the whole-number component (34) of the buffer read pointer (32).

5. Method according to one of the previous claims,
   **characterized by that**
   the estimated value r of the scanning rate ratio is determined by a feedback filter (38).

6. Method according to one of the previous claims,
   **characterized by that**
   audio data is transmitted in real time via the communication network (5) and is reproduced on the receiver side as analog audio signals (8).

7. Device for compensating fluctuations of scanning rates $f_A$, $F_{DAC}$ which form the basis for an input data flow (11) applied on a receiver (6) and for an output data flow (12) outputted by the receiver (6), wherein the input data flow (11) can at first be transmitted via a communication network (5) causing network jitter and can be subsequently intermediately stored in the receiver (6) in a buffer (20) whose level can be monitored by a buffer read pointer (32) and can be regulated in the area of a theoretical value, **characterized by** a buffer read pointer calculating unit (31) for dividing the buffer read pointer (32), which has a real pointer value, into a whole-number (34) and a non-whole-number component (36), a receiver unit (6) for processing a scanning rate ratio of scanning rate $f_A$ of the input data flow and scanning rate $F_{DAC}$ of the output data flow (12), a scanning rate estimator (24) for determining an estimated value r of the scanning rate ratio for controlling an adaptive scanning rate conversion (28) for converting the scanning rate $f_A$ of the input data flow and the scanning rate $F_{DAC}$ of the output data flow depending on the whole-number component (34) of the buffer read pointer (32), a digital filter (26) for carrying out an adaptive scanning rate conversion (28), wherein the dynamically variable filter coefficients f[m] of the digital filter (26) can be calculated as a function of the non-whole-number component (36) of the buffer read pointer, a time-variant low-pass filter with a filter length Nf as a digital filter (26) for carrying out an adaptive scanning rate conversion (28), wherein the current level and the number of scanning values corresponding to the filter length (Nf) in the direction of the past can be taken into consideration in the buffer (20) by the whole-number component (34) of the buffer read pointer (32), an FIF filter (26) for carrying out an adaptive scanning rate conversion, with a cut-off frequency fg

$$f_g = \begin{cases} \dfrac{f_A}{2} & r \le 1 \\[2ex] \dfrac{f_A}{2} \cdot \dfrac{1}{r} & r > 1 \end{cases}$$

and the following filter coefficients f[m]

$$f[m] = \frac{\sin\left(\pi \cdot \dfrac{1}{r} \cdot \left(m - \dfrac{N_f}{2} - \Delta t_f\right)\right)}{\left(\pi \cdot \dfrac{1}{r} \cdot \left(m - \dfrac{N_f}{2} - \Delta t_f\right)\right)}$$

wherein r= $f_A/f_{DAC}$ and $f_A$ is the input scanning rate, r is the estimated scanning rate ratio, Nf is the filter length, m is the whole number index from 0 to Nf, -1 and Δtf is the non-whole-number component of the buffer read pointer.

8. Device according to Claim 7,
**characterized by**
a buffer (20), especially an FIFO annular buffer for storing the input data flow (11) which can be written into the buffer (20) with its basic scanning rate $f_A$ via a buffer write pointer (33).

9. The device according to one of Claims 7 to 8,
**characterized by**
a control unit (24) for the dynamic controlling of the scanning rate conversion based on the determined distance between the buffer write pointer (33) and the whole-number component (34) of the buffer read pointer (32).

10. Device according to one of Claims 7 to 9,
**characterized by**
a control unit (24) for the dynamic control of the scanning rate conversion by a feedback filter (38).

11. Sonar system with a device according to one of Claims 7 to 10 and/or for carrying out a method according to one of Claims 1 to 6, wherein the input data flow (11) applied on the receiver (6) contains scanning values of an audio signal of a listening channel with a first scanning rate $f_A$ and the output data flow (12) applied on the receiver (6) contains scanning values of an outputted audio signal with a second scanning rate $f_{DAC}$ different from the first scanning rate.

**Revendications**

1. Procédé de compensation de variations de fréquences d'échantillonnage $f_A$, $f_{DAC}$ qui sont à l'origine d'un courant de données d'entrée (11) présent sur un récepteur (6) et d'un courant de données de sortie (12) émis par le récepteur (6), le courant de données d'entrée (11) étant d'abord transmis par le biais d'un réseau de communication (5) provoquant une gigue de réseau et ensuite mémorisé temporairement sur le récepteur (6) dans une mémoire tampon (20), dont l'état de remplissage est surveillé par un pointeur de lecture de mémoire tampon (32) et maintenu dans la plage d'une valeur de consigne,
**caractérisé en ce que**
le pointeur de lecture de mémoire tampon (32) possède une valeur de pointeur réelle et est divisé en une part entière (34) et une part non entière (36), une valeur estimée r d'un rapport de fréquences d'échantillonnage de la fréquence d'échantillonnage $f_A$ du courant de données d'entrée et de la fréquence d'échantillonnage $f_{DAC}$ du courant de données de sortie est déterminée en fonction de la part entière (34) du pointeur de lecture de mémoire tampon (32), la conversion de fréquence d'échantillonnage adaptative (28) est exécutée au moyen d'un filtre numérique (26) avec des coefficients de filtrage f[m] variables dynamiquement, les coefficients de filtrage (f[m]) étant calculés en fonction de la part non entière (36) du pointeur de lecture de mémoire tampon (32), le filtre numérique (26) équivaut à un filtre passe-bas variable en temps avec une longueur de filtre ($N_f$), qui prend en compte l'état de remplissage actuel de la mémoire tampon (20) ainsi que le nombre d'échantillons correspondant à la longueur de filtre ($N_f$) en direction du passé dans la mémoire tampon (20) au moyen de la part entière (34) du pointeur de lecture de mémoire tampon (32) et la conversion de fréquence d'échantillonnage (28) est effectuée au moyen d'un filtre RIF (26), qui présente une fréquence limite fg

$$f_g = \begin{cases} \dfrac{f_A}{2} & r \leq 1 \\[2ex] \dfrac{f_A}{2} \cdot \dfrac{1}{r} & r > 1 \end{cases}$$

et les coefficients de filtrage f[m] suivants

$$f[m] = \frac{\sin\left(\pi \cdot \dfrac{1}{r} \cdot \left(m - \dfrac{N_f}{2} - \Delta t_f\right)\right)}{\left(\pi \cdot \dfrac{1}{r} \cdot \left(m - \dfrac{N_f}{2} - \Delta t_f\right)\right)}$$

où $r = f_A/f_{DAC}$ et $f_A$ est la fréquence d'échantillonnage du courant de données d'entrée, r le rapport de fréquences d'échantillonnage estimé, Nf la longueur de filtre, m un indice entier de 0 à $N_f$ -1 et $\Delta t_f$, la part non entière (36) du pointeur de lecture de mémoire tampon.

2. Procédé selon la revendication 1,
   **caractérisé en ce que**
   les coefficients de filtrage f[m] du filtre (26) sont multipliés par une fenêtre de pondération, la fenêtre de pondération étant en particulier une fenêtre rectangulaire, une fenêtre de Hann, une fenêtre de Hamming, une fenêtre de Blackman ou une fenêtre de Kaiser.

3. Procédé selon l'une des revendications précédentes,
   **caractérisé en ce que**
   le courant de données d'entrée (11) est écrit avec la fréquence d'échantillonnage $f_{DAC}$ à l'origine de celui-ci sur le récepteur (6) au moyen d'un pointeur d'écriture de mémoire tampon (33) dans la mémoire tampon (20) réalisée sous la forme d'un buffer circulaire FIFO.

4. Procédé selon l'une des revendications précédentes,
   **caractérisé en ce que**
   la valeur estimée r du rapport de fréquences d'échantillonnage est déterminée sur la base d'un écart déterminé entre le pointeur d'écriture de mémoire tampon (33) et la part entière (34) du pointeur de lecture de mémoire tampon (32).

5. Procédé selon l'une des revendications précédentes,
   **caractérisé en ce que**
   la valeur estimée r du rapport de fréquences d'échantillonnage est déterminée au moyen d'un filtre à rétroaction (38).

6. Procédé selon l'une des revendications précédentes,
   **caractérisé en ce que**
   des données audio sont transmises en temps réel par le biais du réseau de communication (5) et sont reproduites côté réception sous la forme de signaux audio analogiques (8).

7. Dispositif de compensation de variations de fréquences d'échantillonnage $f_A$, $F_{DAC}$, qui sont à l'origine d'un courant de données d'entrée (11) présent sur un récepteur (6) et d'un courant de données de sortie (12) émis par le récepteur (6), le courant de données d'entrée (11) pouvant être d'abord transmis par le biais d'un réseau de communication (5) provoquant une gigue de réseau et ensuite mémorisé temporairement sur le récepteur (6) dans une mémoire tampon (20), dont l'état de remplissage peut être surveillé par un pointeur de lecture de mémoire tampon (32) et régulé dans la plage d'une valeur de consigne,
   **caractérisé par**
   une unité de calcul de pointeur de lecture de mémoire tampon (31) destinée à diviser le pointeur de lecture de mémoire tampon (32), qui possède une valeur de pointeur réelle, en une part entière (34) et une part non entière (36),
   une unité de récepteur (6) destinée à traiter un rapport de fréquences d'échantillonnage de la fréquence d'échantillonnage $f_A$ du courant de données d'entrée et de la fréquence d'échantillonnage $f_{DAC}$ du courant de données de sortie (12), un estimateur de fréquence d'échantillonnage (24) destiné à déterminer une valeur estimée r du rapport de fréquences d'échantillonnage pour commander une conversion de fréquence d'échantillonnage adaptative (28) afin de convertir la fréquence d'échantillonnage $f_A$ du courant de données d'entrée et la fréquence d'échantillonnage $f_{DAC}$ du courant de données de sortie en fonction de la part entière (34) du pointeur de lecture de mémoire tampon (32), un filtre numérique (26) destiné à exécuter une conversion de fréquence d'échantillonnage adaptative (28), les coefficients de filtrage f[m] variables dynamiquement du filtre numérique (26) pouvant être calculés en fonction de la part non entière (36) du pointeur de lecture de mémoire tampon (32),

un filtre passe-bas variable en temps présentant une longueur de filtre Nf comme filtre numérique (26) destiné à exécuter une conversion de fréquence d'échantillonnage adaptative (28), l'état de remplissage actuel ainsi que le nombre d'échantillons correspondant à la longueur de filtre (Nf) en direction du passé dans la mémoire tampon (20) pouvant être pris en compte au moyen de la part entière (34) du pointeur de lecture de mémoire tampon (32),

un filtre RIF (26) destiné à exécuter une conversion de fréquence d'échantillonnage adaptative, présentant une fréquence limite fg

$$f_g = \begin{cases} \dfrac{f_A}{2} & r \le 1 \\[2ex] \dfrac{f_A}{2} \cdot \dfrac{1}{r} & r > 1 \end{cases}$$

et les coefficients de filtrage f[m] suivants

$$f[m] = \frac{\sin\left(\pi \cdot \dfrac{1}{r} \cdot \left(m - \dfrac{N_f}{2} - \Delta t_f\right)\right)}{\left(\pi \cdot \dfrac{1}{r} \cdot \left(m - \dfrac{N_f}{2} - \Delta t_f\right)\right)},$$

où $r = f_A/f_{DAC}$ et $f_A$ est le débit de données d'entrée, r le rapport de fréquences d'échantillonnage estimé, Nf la longueur de filtre, m l'indice entier de 0 à Nf -1 et $\Delta t_f$, la part non entière du pointeur de lecture de mémoire tampon.

8. Dispositif selon la revendication 7, **caractérisé par**
une mémoire tampon (20), en particulier un buffer circulaire FIFO, destinée à mémoriser le courant de données d'entrée (11) qui peut être écrit avec la fréquence d'échantillonnage $f_A$ à l'origine de celui-ci dans la mémoire tampon (20) par le biais d'un pointeur d'écriture de mémoire tampon (33).

9. Dispositif selon l'une des revendications 7 à 8, **caractérisé par**
une unité de commande (24) destinée à la commande dynamique de la conversion de fréquence d'échantillonnage, qui est basée sur l'écart déterminé entre le pointeur d'écriture de mémoire tampon (33) et la part entière (34) du pointeur de lecture de mémoire tampon (32).

10. Dispositif selon l'une des revendications 7 à 9, **caractérisé par**
une unité de commande (24) destinée à la commande dynamique de la conversion de fréquence d'échantillonnage au moyen d'un filtre à rétroaction (38).

11. Installation sonar comprenant un dispositif selon l'une des revendications 7 à 10 et/ou destiné à exécuter un procédé selon l'une des revendications 1 à 6, dans laquelle le courant de données d'entrée (11) présent sur le récepteur (6) contient des échantillons d'un signal audio d'un canal d'écoute avec une première fréquence d'échantillonnage $f_A$ et le courant de données de sortie (12) présent sur le récepteur (6) contient des échantillons d'un signal audio émis avec une seconde fréquence d'échantillonnage $f_{DAC}$ différente de la première fréquence d'échantillonnage.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9522233 A
- EP 0987894 B1
- US 5475628 A
- US 655308781 B
- US 6061410 A
- US 20040120361 A1

**In der Beschreibung aufgeführte Nicht-Patentliteratur**

- Einführung in die Physik und Technik der Unterwasser-Schallsysteme/Introduction to the Physics and Engineering of Underwater Acoustic Systems. **MANFRED SIEGEL.** Raumfilterung/Space Filtering. Eigenverlag der Atlas Elektronik GmbH, 2005